# EUROPÄISCHE PATENTSCHRIFT

(11) **EP 1 255 660 B1**
(45) Veröffentlichungstag und Bekanntmachung des Hinweises auf die Patenterteilung: **22.06.2005**
(21) Anmeldenummer: 01915168.7
(22) Anmeldetag: 27.01.2001
(51) Int. Cl.: B60L 11/18, H05K 5/00

(54) **BRENNSTOFFZELLE UND STEUERUNG IM LÖSBAREN GEHÄUSE**
FUEL CELL AND CONTROL UNIT IN A DETACHABLE HOUSING
CELLULE ELECTROCHIMIQUE ET UNITE DE COMMANDE LOGEES DANS UN BOITIER AMOVIBLE

(30) Priorität: 18.02.2000 DE 10006781
(43) Veröffentlichungstag der Anmeldung: 13.11.2002
(73) Patentinhaber: Ballard Power Systems AG, 73230 Kirchheim / Teck-Nabern (DE)
(72) Erfinder: BELSCHNER, Werner, 73274 Notzingen (DE); BLUTBACHER, Reinhold, 73278 Schlierbach (DE); SONNTAG, Anton, 73230 Kirchheim (DE); SONNTAG, Josef, 73230 Kirchheim (DE)
(74) Vertreter: Beyer, Andreas, Dr.
(86) Internationale Anmeldenummer: PCT/EP2001/000879
(87) Internationale Veröffentlichungsnummer: WO 2001/060655

(56) Entgegenhaltungen:
- EP-A- 0 633 158
- WO-A-99/46140
- US-A- 5 053 634

## Beschreibung

Die Erfindung bezieht sich auf eine Vorrichtung mit einer für die elektrische Energieerzeugung bestimmten Brennstoffzelle und mit Verteilung von elektrischer Energie an in einem mit der Brennstoffzelle verbundenen Hochvolt-Leitungsnetz angeordnete elektrische Verbraucher und an weitere elektrische Verbraucher, die in einem Niedervolt-Leitungsnetz angeordnet sind, das über wenigstens einen Gleichspannungs-Gleichspannungs-Wandler mit dem Hochvolt-Leitungsnetz verbunden ist und neben den Verbrauchern wenigstens einen Akkumulator enthält.

In mobilen Einrichtungen wie Fahrzeugen mit Brennstoffzelle für die elektrische Energieerzeugung sind vielfach zwei elektrische Leitungsnetze vorhanden. Ein von der Brennstoffzelle gespeistes Hochvolt-Netz enthält die Verbraucher mit höheren Leistungen wie einen oder mehrere Fahrmotore und Verbraucher die zum Betrieb des Fahrzeugs im Stand oder bei der Bewegung benötigt werden sowie elektrische Antriebe für Hilfsaggregate zum Starten und zum Betrieb der Brennstoffzelle, die z. B. als PEM-Brennstoffzelle ausgebildet ist. Das zweite Netz ist ein Niedervolt-Netz mit elektrischen Verbrauchern geringerer Leistung, die bedarfsweiße während der Bewegung oder im Stand der mobilen Einrichtung eingeschaltet werden. Es sind an das Niedervolt-Netz auch Antriebe und andere Verbraucher z. B. Heizstromkreise oder eine Batterie angeschlossen, die zum Starten der Brennstoffzelle benötigt wird. Das Niedervolt-Netz enthält einen Akkumulator der die elektrische Energie zum Starten der Brennstoffzelle an die entsprechenden elektrischen Verbraucher liefert. Zwischen den beiden Netzen ist eine bidirektionale Gleichstrom-Gleichstrom-Wandlung vorgesehen, die im Betrieb aus der Brennstoffzelle Ladestrom für den Akkumulator und bei Bedarf Betriebsstrom für eingeschaltete Verbraucher im Niedervolt-Netz liefert. Während das Niedervolt-Netz einpolig an die Masse der mobilen Vorrichtung angeschlossen ist, ist das Hochvolt-Netz elektrisch isoliert.

Das Dokument EP 0 633 158 offenbart ein Verfahren und eine Vorrichtung zum Starten eines Fahrzeugs, das einen von einer Brennstoffzelle mit elektrischer Energie versorgten Elektromotor aufweist. Das bekannte Fahrzeug weist eine Steuereinheit auf, die mit Sensoren zur Erfassung von Betriebszuständen des Fahrzeugs verbunden ist. EP '158 befasst sich in erster Linie mit dem Regel- und Überwachungsverfahren und enthält keine Lehre bezüglich konstruktiver Ausführungsformen.

Der Erfindung liegt das Problem zugrunde, ein kompaktes, für sich handhabbares, in eine Vorrichtung auswechselbar einbaubares Gerät anzugeben, das in der Vorrichtung, die eine Brennstoffzelle für die Energieerzeugung und wenigstens ein Netz mit von der Brennstoffzelle mit Energie versorgten elektrischen Verbrauchern enthält, für die Brennstoffzelle, für Verbraucher und für das Leitungsnetz Überwachungsfunktionen für elektrische Größen, Verteilungsfunktionen für die Verbraucher und Abschaltfunktionen zur Verhinderung von Schäden bei kritischen Betriebszuständen sowie Schaltfunktionen bei der Start- und Abschaltphase der Brennstoffzelle ausführt.

Das Problem wird erfindungsgemäß durch eine Vorrichtung gemäß dem anhängenden Anspruch 1 gelöst.

Gemäß einer vorteilhaften Weiterbildung schließt die Steuer- und Überwachungseinheit nach dem Starten der Brennstoffzelle beim Erreichen deren Betriebsbereitschaft den Brennstoffzellenschutzschalter und/oder öffnet bei Erfassung von durch die Sensoren gemessenen Betriebszuständen, die vorgebbaren kritischen Betriebszuständen entsprechen, den Brennstoffzellenschutzschalter. Die für die Steuerung und Überwachung der elektrischen Leitungsnetze und deren Verbraucher wesentlichen Funktionen werden durch Bauteile in einem Gerät ausgeübt, das ausbaubar und für sich überprüfbar ist. Es ist daher eine schnelle Funktionsüberprüfung oder Fehlerlokalisierung möglich. Das Gerät kann als für sich handhabbare Einheit wirtschaftlich gefertigt und schnell und einfach in die mobile Einrichtung eingebaut werden. Das Eindringen von Feuchtigkeit durch die Durchführungen wird vermieden. Die Arbeitsweise des Geräts wird daher auch beim Einsatz oder der Aufstellung in feuchter Atmosphäre nicht beeinträchtigt. Eine Steuer- und Auswerteinheit ist durch die deutsche Patentanmeldung 199 500 08.8 bereits vorgeschlagen worden. Auf diese Patentanmeldung der Anmelderin wird hiermit Bezug genommen.

Die Steuer- und Auswerteinheit kann im Inneren des Gehäuses zusammen mit den anderen Komponenten der zentralen Überwachungs- und Schalteinheit angeordnet sein, da sie als Bestandteil der zentralen Überwachungs- und Schalteinheit handhabbar ist. Diese anderen Komponenten der Überwachungs- und Schalteinheit bilden eine Schalt- und Verteileinheit. Bei einer bevorzugten Ausführungsform ist die Steuer- und Auswerteinheit in einem eigenen Gehäuse angeordnet, das die Durchführung für den Abzweig zum Niedervolt-Netz und die Durchführungen mit den leicht lösbaren Kontaktmitteln in der oder an der Gehäusewand für die Leitungsverbindungen zu den Sensoren für die Erfassung der Betriebszustände aufweist und in dessen einer Gehäusewand Steckverbinder mit Anschlüssen von Leitungen angeordnet sind, mit denen die Steuer- und Auswerteinheit an die Sensoren zur Erfassung der Betriebszustände der Brennstoffzelle und der elektrischen Leitungsnetze angeschlossen ist, wobei das eigene Gehäuse lösbar, als Deckel für eine Öffnung an dem am Brennstoffzellengehäuse befestigbaren Gehäuse befestigbar ist. Die Steuer- und Auswerteinheit bildet bei dieser Ausführungsform eine für sich handhabbare Einheit, die auch ohne die Trennung der zentralen Überwachungs- und Schalteinheit ein- und ausgebaut werden kann, d. h. daß auch eine Herstellung, Prüfung, eine Lagerung und ein Transport dieser Einheit möglich ist, was zumindest bezüglich der Ersatzteilhaltung vorteilhaft ist.

Besonders günstig ist es, wenn das Gehäuse der Steuer- und Auswerteinheit gegen das Gehäuse mit den Komponenten der Schalt- und Verteileinheit wärmeisoliert ist. Die Steuer- und Auswerteinheit kann deshalb elektronische Bauteile enthalten, deren Betriebstemperatur nicht in einer ins Gewicht fallenden Weise von der Arbeitstemperatur der Brennstoffzelle beeinträchtigt wird. Beispielsweise sind in der Steuer- und Auswerteinheit hochintegrierte elektronische Schaltungen wie Prozessoren vorgesehen.

Bei einer sehr vorteilhaften Ausführungsform weist die Steuer- und Auswerteinheit eine mit elektronischen Bauteilen versehene Leiterplatte auf , die im Inneren eines wannenförmigen Deckels angeordnet ist, der das auf einer Seite offene Gehäuse mit den Komponenten der Schalt- und Verteileinheit mit einer wärmeisolierenden Einlage vor der Öffnung des Gehäuses abdeckt. Bei dieser Ausführungsform ist bei geöffneten Gehäuse sowohl das Innere des Stromverteilungs- Sicherungs- und Schaltelemente aufweisenden Teils der Überwachungs- und Schalteinheit, d. h. der Schalt- und Verteileinheit, als auch im Deckel die Steuer- und Auswerteinheit leicht zugänglich, was die Prüfung und Inspektion bzw. Wartung wesentlich vereinfacht und erleichtert.

Die Vorrichtung ist vorzugsweise mobil ausgebildet. Insbesondere ist die Vorrichtung ein von einer Brennstoffzelle mit Energie versorgtes Kraftfahrzeug. Es kann sich aber auch um eine andere mobile Vorrichtung wie Boot, Schiff, Lokomotive, Triebwagen usw. handeln.

Vorzugsweise sind die wasserdichten Durchführungen und die leicht lösbaren Kontaktmitteln als wasserdichte Steckverbinder ausgebildet. Die Steckverbinder sind insbesondere durch "Interlock"-Verbindungen gegen Stecken/Ziehen unter Last gesichert. Mit diesen Steckverbindern läßt sich sowohl eine schnelle Herstellung und Lösung der Kontakte als auch ein Schutz vor dem Eindringen von Staub, Wasser oder Feuchtigkeit ins Gehäuseinnere erreichen.

Eine andere Möglichkeit besteht darin, wasserdichte Leitungsdurchführungen vorzusehen, die zumindest an ihren außerhalb des Gehäuses angeordneten Enden Kabelschuhe für die Befestigung mit den zugeordneten Enden der Leitungsnetze aufweisen.

Bei einer bevorzugten Ausführungsform ist die Steuer- und Auswerteinheit mit außerhalb des Gehäuses angeordneten Gassensoren für die Erfassung von Lecks in wasserstofferzeugenden, wasserstoffspeichernden oder wasserstoffleitenden Einheiten, mit einem im Gehäuse mit den Stromverteilungs-, Sicherungs- und Schaltelementen angeordneten Sensor für den Brennstoffzellenstrom, mit wenigstens einem außerhalb der Überwachungs- und Schalteinheit angeordneten Sensor, der den Aufprall der mobilen Einrichtung auf ein Hindernis erfaßt, mit einer im Gehäuse mit den Stromverteilungs-, Sicherungs- und Schaltelementen angeordneten Anordnung zu Messung des Isolationswidertands des elektrisch isolierten Leitungsnetzes, mit einem in der Überwachungs- und Schalteinheit angeordneten Sensor für die Brennstoffzellenspannung verbunden, und öffnet bei Erfassung eines Meßwerts, der aus Sicherheitsgründen unerwünscht oder unzulässig ist, den Brennstoffzellenschutzschalter. Die für die Betriebssicherheit des Brennstoffzellensystems und des Leitungsnetzes vorgesehen Steuer- und Auswertmittel sind bei dieser Ausführungsform in Gehäusen geschützt angeordnet. Bei der Erfassung eines solchen Meßwerts versetzt die Steuer- und Auswerteinheit das Brennstoffzellensystem durch Öffnen des Brennstoffzellenschutzschalters in einen Zustand, in dem die Energieabgabe aus der Brennstoffzelle unterbrochen ist, d. h. das Leitungsnetz mit den elektrischen Verbrauchern wird in einem sicheren Betriebszustand überführt. Damit wird eine Gefährdung von Personen, Teilen der Vorrichtung selbst und im Zusammenhang damit die gesamte Vorrichtung mit dem Brennstoffzellensystem und auch der Umwelt vermieden. Bei einer besonders zweckmäßigen Ausführungsform mit einer Überwachungs- und Schalteinheit, mit der eine Steuer- und Auswerteinheit mit einem deckelförmigen Gehäuse verbunden ist, sind an den Deckelrändern beim Trennen des Deckels die Leitungen zu den Verbrauchern trennende Steckverbinder angeordnet, wobei das deckelförmige Gehäuse mit Steckverbindern an die Leitungen zu den Verbrauchern anschließbar ist. Bei Abnahme des Deckels werden die Leitungen zu den Verbrauchern spannungslos, sofern nicht ein Energiespeicher wie eine Batterie oder ein Kondensator unter den Verbrauchern ist.

Die Steuer- und Auswerteinheit überwacht insbesondere den Brennstoffzellenausgangsstrom auf Überschreiten eines vorgebbaren Grenzwerts, gegebenenfalls den Strom des elektrischen Antriebs und die Spannungen der Brennstoffzelle und gegebenenfalls des Niedervolt-Netzes auf Über- oder Unterschreiten vorgebbarer Grenzwerte und den Isolationswiderstand auf Unterschreiten eines vorgebbaren Werts.

Es ist zweckmäßig, wenn das Gehäuse an einer bei mechanischen Zerstörungen der mobilen Einrichtung nicht oder nur wenig beeinträchtigten Stelle in der mobilen Einrichtung angeordnet ist.

Die Steuer- und Auswerteinheit besteht vorzugsweise aus integrierten Schaltungen, die auf einer Leiterplatte im Gehäuse angeordnet sind. Die Leiter und Abzweige im Gehäuseinneren können als Leitungssatz, als Leiter in Stanzgittertechnik, als Leiterbahnen auf einer Leiterplatte, z. B. einer Multilayer-Leiterplatte, in Form von Kupferschienen oder in Folientechnik ausgebildet sein. Die Art der Leiter und Abzweige hängt von der Größe der Ströme ab, die verteilt werden. Es können auch zwei oder mehr der vorstehend erwähnten Techniken im Gehäuse verwendet werden.

Bei einer bevorzugten Ausführungsform ist über eine beim Entfernen des Gehäuses aus der Verbindung mit dem Brennstoffzellengehäuse auftrennbare Leitung insbesondere mittels lösbarer Kontakte die Brennstoffzelle abschaltbar. Es handelt sich bei dieser Ausführungsform um eine Sicherheitsschaltung. Die Sicherheitsschaltung kann durch eine Brücke über zwei Steckerkontakte oder als eine getrennt mitgeführte Leitung zur Hochvolt-Versorgung ausgebildet sein.

Besonders zweckmäßig ist es, wenn das Gehäuse der Überwachungs- und Schalteinheit und/oder das Brennstoffzellengehäuse Zentrier- oder Führungsmittel zum formschlüssigen Befestigen des Gehäuses am Brennstoffzellengehäuse aufweist. Das Gehäuse kann daher schnell und einfach in seine Halteposition an der Brennstoffzelle gebracht werden.

Am Brennstoffzellengehäuse ist das Gehäuse der Überwachungs- und Schalteinheit anschraubbar oder mittels Rastmitteln befestigbar. Die mechanische Befestigung des Gehäuses am Brennstoffzellengehäuse ist einfach ausgebildet und einfach herstellbar oder lösbar.

Durch die Befestigung des Gehäuses der Überwachungs- und Schalteinheit direkt am Brennstoffzellengehäuse ergeben sich kurze Leitungsabschnitte zwischen den elektrischen Ausgängen der Brennstoffzelle und dem Brennstoffzellenschutzschalter, der als Leistungsschalter ausgebildet ist. Die Fügerichtung des Gehäuses kann nach dem verfügbaren Raum an der Brennstoffzelle und einer leicht zugänglichen Stelle ausgewählt werden. Das Gehäuse der zentralen Schalt- und Überwachungseinheit ist insbesondere starr am Brennstoffzellengehäuse befestigbar. Eine besondere Halterung an anderen Teilen der mobilen Einrichtung erübrigt sich. Durch die Kopplung des Gehäuses mit dem Brennstoffzellengehäuse reicht die Halterung des Brennstoffzellengehäuses in der mobilen Einrichtung für beide Gehäuse aus, so daß das Gehäuse der Schalt- und Überwachungseinheit schwingungsgekoppelt mit der Brennstoffzelle ist.

Die Art der Befestigung und der Ort des Gehäuses der Schalt- und Überwachungseinheit erlaubt einen einfachen und schnellen Ein- und Ausbau des Gehäuses. Service- und Reparaturarbeiten können daher sowohl an der eingebauten als auch an der ausgebauten Schalt- und Überwachungseinheit ausgeführt werden. Die Schalt- und Überwachungseinheit kann ohne Ausbau anderer Teile der mobilen Einheit ein- und ausgebaut werden.

Es ist zweckmäßig, wenn innerhalb des Gehäuses der Schalt- und Überwachungseinheit ein eigenes Gehäuse oder wenigstens eine Abteilung für Sicherungen in den Leitern und deren Abzweige angeordnet und durch eine dicht verschließbare Öffnung im Gehäuse der Schalt- und Überwachungseinheit zugänglich ist. Der Wechsel von Sicherungen ist bei einer derartigen Einrichtung leicht und schnell möglich, ohne daß das Gehäuse ausgebaut werden muß. Als Träger für die Sicherungshalter ist insbesondere eine Leiterplatte vorgesehen. Je nach Größe der Leitungsquerschnitte der zu den Sicherungshaltern verlaufenden Leitungen und der Anzahl der Sicherungen können auch isolierte Leitungen, Stanzgitter aus elektrisch gut leitenden Materialien, Leiterschienen oder Folien mit Leiterbahnen verwendet werden. Vorzugsweise sind die Sicherungen für das Hochvolt-Leitungsnetz im Sicherungsgehäuse angeordnet und von außerhalb des Gehäuses der Schalt- und Überwachungseinheit über eine dicht verschließbare Öffnung zugänglich. Diese Öffnung ist insbesondere mittels des deckelartigen Gehäuses der Steuer- und Auswerteinheit verschließbar. Auf diese Weise wird eine sichere und geschlossene Unterbringung der Sicherungen des Hochvolt-Leitungsnetzes erreicht. Die Abteilung mit den Sicherungen für die Abzweige des Hochvolt-Leitungsnetzes hat zweckmäßigerweise im Gehäuse der zentralen Schalt- und Überwachungseinheit eine zusätzlich Abdeckung. Damit ist die Sicherheit gegen unbeabsichtigtes Berühren nach dem Öffnen des Gehäuses der Schalt- und Überwachungseinheit gegeben.

Zweckmäßigerweise sind die Sicherungen auf einer Leiterplatte unter dem dicht verschließbaren Deckel des Gehäuses der zentralen Schalt- und Überwachungseinheit angeordnet.

Das Niedervolt- und das Hochvolt-Leitungsnetz sind Gleichspannungsnetze, d. h. zweipolig ausgebildet. Da ein Pol des Niedervolt-Leitungsnetzes mit der Masse der mobilen Einrichtung verbunden ist, reicht eine einpolige Sicherung der Leitungen des Netzes und der Verbraucher aus. Die Abzweige bzw. Verbraucher des Hochvolt-Leitungsnetzes können ein- oder zweipolig abgesichert sein.

Der oder die Antriebsmotoren für das Fahrwerk bzw. der vorgeschalteten Stromrichter und auch andere elektrische Verbraucher sind insbesondere im Inneren der Schalt- und Überwachungseinheit abgesichert.

Wenn ein besonders widerstandfähiges Gehäuse für die Schalt- und Überwachungseinheit benötigt wird, wird das Gehäuse aus Metall hergestellt. Ein Vorteil eines derartigen Gehäuses ist auch die gute Wärmeleitfähigkeit, d. h. es wird die im Gehäuse entstehende Wärme gut abgeführt. Die Wärmeabgabe nach außen kann durch Kühlrippen oder anders ausgebildete Wärmetauscher noch gesteigert werden.
Ein Gehäuse mit großer Festigkeit kann auch durch ein Gehäuse aus hochfestem, beständigem Kunststoff erzielt werden, mit dem überdies eine Gewichtseinsparung erreicht wird. Ein solches Gehäuse besteht zweckmäßigerweise teilweise aus Metall, wenn die Wärmeabführung nach außen über das gut wärmeleitende Metall erfolgen soll. Der Gehäuseabschnitt, der aus Metall besteht, hat insbesondere Kühlrippen.

Bei einer weiteren bevorzugten Ausführungsform weist das Gehäuse der Überwachungs- und Schalteinheit an Gehäuseöffnungen einen Schalter, z. B. Mikroschalter, oder Sensoren, der beim Öffnen des Gehäusedeckels anspricht und den Brennstoffzellenschutzschalter öffnen. Die Einwirkung auf den Brennstoffzellenschutzschalter beim Öffnen des Schalters kann durch Unterbrechung des Haltestroms des Brennstoffzellenschutzschalters erfolgen, d. h. der Schalter an der Öffnung des Gehäuses ist z. B. im Stromkreis der Spule des Brennstoffzellenschutzschalter angeordnet. Nach dem Öffnen des Brennstoffzellenschutzschalters sind das Innere des Gehäuses bis auf Niedervolt-Stromkreise und die Leitungsabschnitte von den Ausgängen der Brennstoffzelle bis zu den Kontakten des Brennstoffzellenschutzschalters spannungsfrei. Anstelle des Schalters am Gehäusedeckel kann auch ein Sensor, z. B. eine Lichtschranke usw. verwendet werden. Ist die Steuer- und Auswerteinheit im Deckel für das Gehäuse der Schalt- und Überwachungseinheit angeordnet, dann ist bei abgenommen Deckel der Brennstoffzellenschutzschalter stromlos, so daß das Hochvolt-Leitungsnetz spannungslos ist.

Die Sicherungen für die Stromkreise des Niedervolt-Leitungsnetzes können ebenfalls im Gehäuse der Schalt- und Überwachungseinheit angeordnet sein. In einem solchen Fall sind sie von den Sicherungen des Hochvolt-Leitungsnetzes zweckmäßigerweise getrennt von außen zugänglich angeordnet. Es ist aber auch möglich, die Sicherung für das Niedervolt-Leitungsnetz in einem von außen zugänglichen Gehäuse separat vom Gehäuse der Schalt- und Überwachungseinheit anzuordnen. Die Sicherungsschalter sind z. B. auf einer Leiterplatte angeordnet. Die Sicherungshalter können auch mit Kupferschienen oder mit flexiblen Leitungen oder mit Folien, die Leiterbahnen tragen, verbunden sein. Eine Anordnung, bei der die Verbindungen zu den Sicherungshaltern in Stanzgittertechnik ausgebildet sind, ist ebenfalls möglich.

Das Sicherungsgehäuse für das Niedervolt-Leitungsnetz ist z. B. im Niedervolt-Leitungsnetz integriert. Vorteilhaft ist aber ein separates Sicherungsgehäuse, das unabhängig vom Gehäuse der Überwachungs- und Schalteinheit von außen zugänglich ist.

Die Gleichstrom-Gleichstrom-Wandlereinrichtung , die beispielsweise zwischen dem Hochvolt-Leitungsnetz und dem Niedervolt-Leitungsnetz als bidirektionaler Wandler angeordnet ist, kann für die Aufnahme des Betriebs einen Vorladestrom erfordern. Die Komponenten für die Vorladung können im Gehäuse der Über-wachungs- und Schalteinheit angeordnet sein. Falls die Option einer Vorladung nicht benötigt wird, bleibt der für die Komponenten reservierte Raum im Gehäuse frei. Eine andere günstige Anordnung für die Ausrüstung der Überwachungs- und Schalteinheit besteht darin, die Komponenten in einem eigenen Gehäuse einzubauen, das von außen an das Gehäuse der Überwachungs- und Schalteinheit anbaubar ist, wobei wasserdichte Durchführungen bzw. Steckverbinder für die elektrische Verbindung in den beiden Gehäusen vorgesehen sind.

Der Brennstoffzellenschutzschalter für die Trennung der Brennstoffzelle von den Verbrauchern, und von einer Hybrid-Batterie bzw. Superkondensator kann zweipolig ausgebildet sein, wobei beide Pole Leistungsschalterpole zur Unterbrechung von Kurzschlüssen sind. Es besteht aber auch die Möglichkeit nur den Kontakt eines Pols für das Schalten von Vollast- und Kurzschlußströmen auszubilden. Der andere Kontakt ist dann nur als leitungsloser Trennschalter ausgebildet. In diesem Fall kann der zweite Kontakt mit einer gewissen Verzögerung in Bezug auf den ersten Kontakt geöffnet werden, da der erste Kontakt höhere Ströme schaltet. Ein Kontakt kann dann ein kontaktloser z. B. Halbleiter-, Schalter sein. Auch kann ein einpoliger Brennstoffzellenschutzschalter verwendet werden, der für das Schalten des maximalen Laststroms und des Kurzschlußstroms ausgelegt ist.

Um Service und Reparatur von Komponenten der mobilen Einrichtung zu erleichtern bzw. ohne Gefährdung durch spannungsführende Gegenstände durchführen zu können, ist es zweckmäßig, einen manuell betätigbaren Ausschalter im Gehäuse der Überwachungs- und Schalteinheit vorzusehen, wobei der Ausschalter ohne Ausbau des Gehäuses von außen betätigt werden kann. Hierdurch können das Hochvolt-Leitungsnetz mit seinen elektrischen Verbrauchern von der Brennstoffzelle galvanisch getrennt werden. Zweckmäßig ist ein zusätzlicher Schalter, der von außen zugänglich ist, für eine eventuelle vorhandene Hybrid-Batterie bzw. einen Superkondensator vorgesehen.

Die Erfindung wird im folgenden an Hand eines in einer Zeichnung dargestellten Ausführungsbeispielen näher beschrieben, aus denen sich weitere Einzelheiten, Merkmale und Vorteile ergeben.

Es zeigen:
- Fig. 1: eine mobile Vorrichtung mit einer Brennstoffzelle für die Erzeugung elektrischer Energie und mit Verbrauchern, die an ein von der Brennstoffzelle versorgtes Leitungsnetz angeschlossen sind, im Schema,
- Fig. 2: ein Blockschaltbild einer in einer mobilen Einrichtung angeordneten, mit einer Brennstoffzelle lösbar verbundenen zentralen Überwachungs- und Schalteinheit.
- Fig. 3: eine perspektivische Ansicht einer mit ihrem Gehäuse am Gehäuse der Brennstoffzelle befestigten zentralen Überwachungs- und Schalteinheit,
- Fig. 4: eine zentrale Überwachungs- und Schalteinheit mit einer anderen Ausführungsform eines Gehäuses schematisch im Schnitt,
- Fig. 5: eine zentrale Überwachungs- und Schalteinheit mit einer weiteren Ausführungsform eines Gehäuses schematisch im Schnitt.

Eine mobile Einrichtung 1, insbesondere ein Fahrzeug, enthält eine Brennstoffzelle 2, die als PEM-Zelle ausgebildet sein kann und aus einem Stack einzelner Brennstoffzellenmodule besteht. Die Brennstoffzelle 2 speist über ein zweipoliges Leitungsnetz 3 elektrische Verbraucher und z. B. wenigstens einen Energiespeicher wie Hybrid-Batterie oder Superkondensator. Da die Brennstoffzelle 2 aus einer größeren Anzahl einzelner Module aufgebaut ist, wird eine höhere Ausgangsspannung im Nennbetrieb ausgegeben.

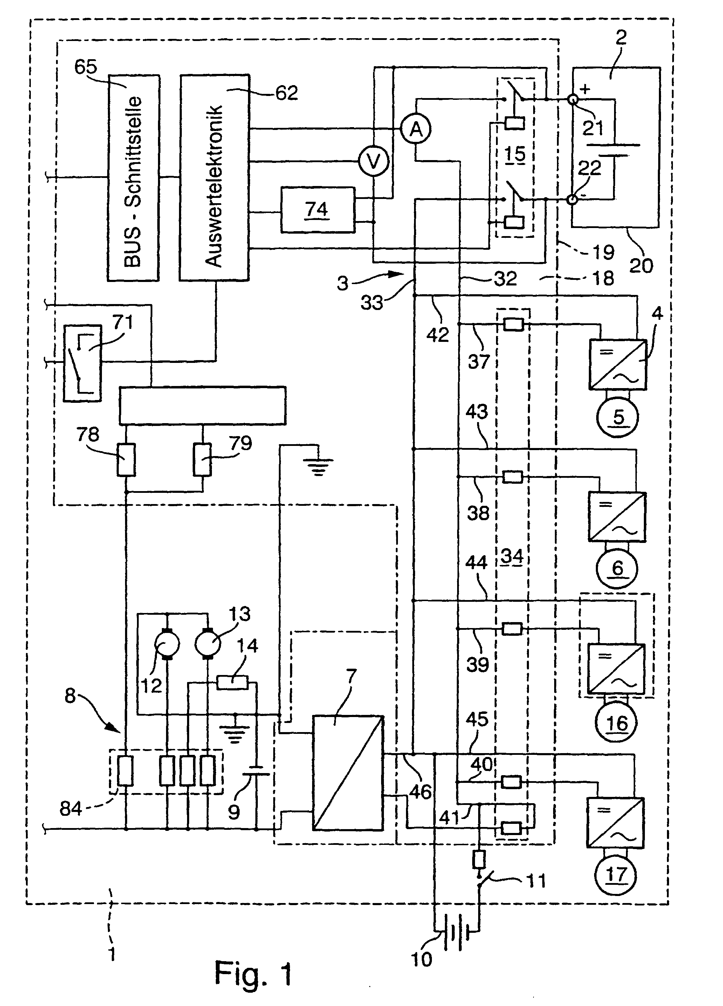

Das Leitungsnetz 3 wird deshalb als Hochvolt-Leitungsnetz 3 oder Hochvolt-Netz 3 bezeichnet. An das Hochvolt-Netz 3 ist über einen Stromrichter 4 ein Antriebsmotor 5 angeschlossen, der z. B. Räder der mobilen Einrichtung 1 antreibt, bei der es z. B. um ein Fahrzeug handelt. Mit dem Netz 3 ist über einen nicht näher bezeichneten Stromrichter ein Antriebsmotor 6 für einen Kompressor verbunden, der für die Versorgung der Brennstoffzelle 2 mit Luft vorgesehen ist. Weiterhin steht mit dem Netz 3 eine bidirektionale Gleichspannungs-Schnittstelle z. B. ein bidirektionaler Gleichstrom-Gleichstrom-Wandler 7, in Verbindung, der einen weiteren Ein-, Ausgang zu einem Bordnetz 8 aufweist, das eine geringere Betriebsspannung als das Hochvolt-Netz 3 hat. Mit dem Bordnetz 8, das auch als Niedervolt-Netz 8 bezeichnet wird, ist ein Akkumulator 9 verbunden, der z. B. über Schalter an den Gleichstrom-Gleichstrom-Wandler 7 anschließbar ist. Das Niedervolt-Netz 8, das z. B. eine Betriebsspannung von 12 bzw. 14 V hat, weist eine Reihe von elektrischen Verbrauchern auf, von denen in Fig. 1 nur ein Scheibenwischermotor 12, ein Lüftermotor 13 und eine Heizung 14 dargestellt sind. Es kann auch ein weiteres Bordnetz mit 36 V bzw. ein Netz mit 24 V für ein LAN bzw. Bus vorgesehen sein. Die Brennstoffzelle 2 ist über einen z. B. zweipoligen Brennstoffzellenschutzschalter 15 an das Hochvolt-Leitungsnetz 3 anschaltbar. An das Netz 3 sind beispielsweise über nicht näher bezeichnete Stromrichter ein Lüftermotor 16 und ein Pumpenmotor 17 angeschlossen. Es können auch noch weitere Verbraucher, die nicht dargestellt sind, und eine Hybrid-Batterie oder Superkondensator 10 mit dem Hochvolt-Netz 3 verbunden sein. Der Superkondensator 10 ist insbesondere durch einen Ausschalter 11 vom Leitungsnetz 3 abtrennbar.

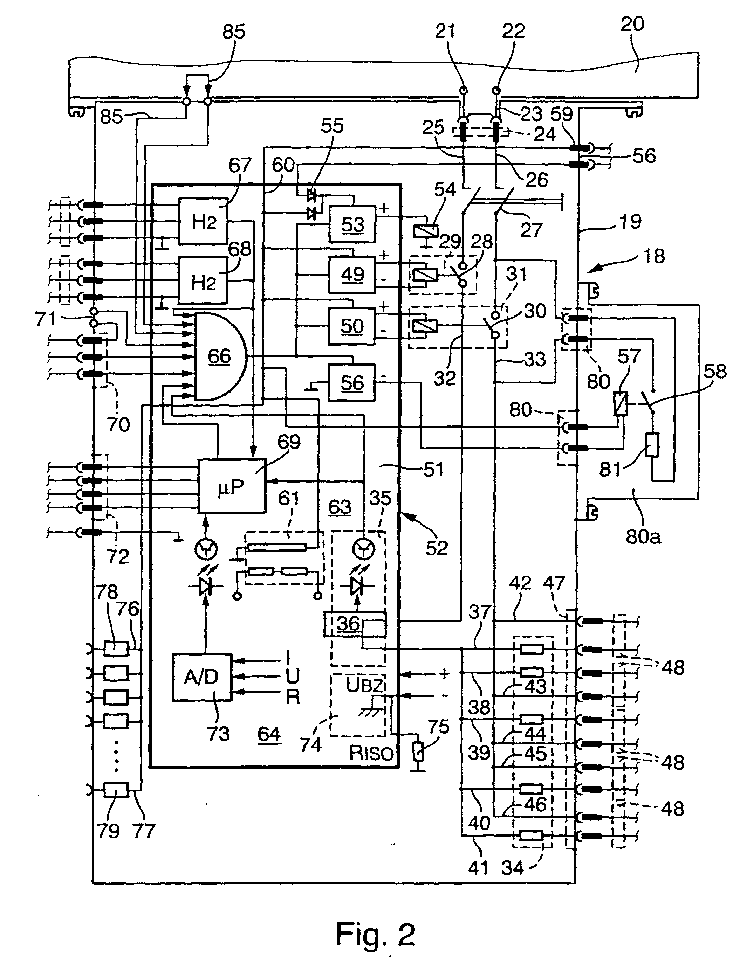

In der mobilen Vorrichtung 1 ist eine zentrale Überwachungs- und Schalteinheit 18 vorhanden, die in Fig. 2 näher dargestellt ist. Die zentrale Überwachungs- und Schalteinheit 18 befindet sich in einem Gehäuse 19, das leicht lösbar am Gehäuse 20 der Brennstoffzelle 2 befestigt ist. Die Brennstoffzelle 2 hat zwei elektrische Ausgänge 21, 22 bzw. Pole, die an einen Steckverbinder 23 angeschlossen sind, der wasserdicht ausgeführt ist. Am Gehäuse 19 befindet sich ein korrespondierendes Steckverbinderteil 24, dessen nicht näher bezeichnete Kontakte zweipolig über Leiter 25, 26 mit den Kontakten eines Aus-Schalters 27 verbunden sind, der von Hand durch einen aus dem Gehäuse 19 herausragenden Griff betätigbar ist. Bei geöffneten Ausschalter 27 ist das gesamte, hinter dem Ausschalter 27 liegende Hochvolt-Netz 3 bis auf z. B. separat abschaltbare Batterie- oder Kondensatorteilnehmer spannungslos, so daß Service-, Wartungs- oder Reparaturarbeiten an oder in der mobilen Einrichtung ohne Ausbau des Gehäuses 19 und ohne Gefährdung durch spannungsführende Teil ausgeführt werden können.

Hinter dem Aus-Schalter 27 befinden sich im Zuge der Leiter 25, 26 jeweils ein Arbeitskontakt 28 eines ersten Brennstoffzellenschutzschalters 29, und ein Arbeitskontakt 30 eines zweiten Brennstoffzellenschutzschalters 31. Dem Arbeitskontakt 28 ist eine Leiter 32 und dem Arbeitskontakt 30 ein Leiter 33 nachgeschaltet. Die Leiter 25, 26, 32 und 33 sind Bestandteile des Hochvolt-Netzes 3, bei dem es sich um ein elektrisch isoliertes, d. h. ein ungeerdetes Netz, handelt. Zwei einpolige Brennstoffzellenschutzschalter 29, 31 erhöhen die Sicherheit der Abschaltung gegenüber einem zweipoligen mit gemeinsam betätigten Polen insoweit, als die Wahrscheinlichkeit, daß beide Schalter nicht betätigbar sind, kleiner als die Wahrscheinlichkeit des Ausfalls eines Schalters ist. Der Ausschalter 27 kann entfallen, wenn Vorkehrungen getroffen sind, daß die Brennstoffzellenschutzschalter 29, 31 von Hand betägtigbar, d. h. ausschaltbar sind. Eine Schalt- und Überwachungseinheit 18 ohne separaten Ausschalter zeigt Fig. 1. Im Inneren des Gehäuses 19 befindet sich ein Gehäuse 34 mit Sicherungshaltern und Sicherungen, die unten noch näher beschrieben sind. Der Leiter 32 ist mit einem Stromsensor 35 verbunden, der einen Stromwandler 36 aufweist, der einen Ringkern aufweist, durch den ein Stromleiter berührungslos hindurchgeführt ist.
Vom Leiter 32 gehen hinter dem Stromwandler 36 Abzweige 37, 38, 39, 40, 41 aus. In entsprechender Weise gegen vom Leiter 33 Abzweige 42, 43, 44, 45, 46 aus. Die Abzweige 37 bis 41 verlaufen ins Innere des Gehäuses 34 zu Sicherungshaltern mit Sicherungen, die nicht näher bezeichnet sind. Von den Sicherungshaltern dieser Sicherungen und von den Abzweigen 42 bis 46 verlaufen Leiter zu einem Steckverbinder 47 in der Wand des Gehäuses 19. Jeweils Paare 37, 42 bzw. 38, 43; 39, 44, 40, 45 und 41, 46 bilden Abzweigleitungen zu Verbrauchern in der mobilen Einrichtung 1. Die Abzweigleitungen 37, 39, 40 und 41 sind mit nicht näher bezeichneten Sicherungen versehen und zusammen mit der Abzweigleitung 33 mit den Abzweigen 42, 43, 44, 45, 46 für den Anschluß von externen Leitungen am Gehäuse 18 bestimmt, die von den Verbrauchern ausgehen und an den Enden Steckverbinder 48 haben, die mit dem Steckverbinder 47 korrespondieren. Der Steckverbinder 47 ist ebenso wie der Steckverbinder 24 wasserdicht ausgebildet. An die Abzweigleitungen 37, 42 und 39, 44; 40, 45; 41, 46 sind z. B. der Stromrichter 4, und die Stromrichter des Lüfter- und Pumpenmotors 16, 17 und des Gleichstrom-Gleichstrom-Wandlers 7 angeschlossen. An die Abzweige 38, 43 ist die eine separate Absicherung enthaltende Antriebseinheit mit dem Stromrichter und dem Antriebs- bzw. Fahrmotor 6 angeschlossen.

Die in Fig. 2 dargestellten Abzweige sind nur als Beispiel zur Verdeutlichung angegeben. Je nach der Anzahl der Hochvolt-Verbraucher in der mobilen Einrichtung können auch mehr Abzweige vorhanden sein.

Die Leiter 25, 26, 32, 33 und die Abzweige 37 bis 44 sowie die von den Sicherungshaltern im Gehäuse 34 zum Steckverbinder 47 verlaufendem Leiter sind als isolierte Leiter, in Stanzgittertechnik hergestellte Leiter oder als Kupferschienen ausgebildet. Es können auch gedruckte Leiterbahnen auf Platinen oder Folien vorgesehen sein. Die Ausbildung der Leiter in einer der erwähnten Techniken hängt von der Stückzahl und von den benötigten Leiterquerschnitten ab.

Die Brennstoffzellenschutzschalter 29, 31 sind Leistungsschalter d. h. für die Abschaltung des Vollast- und Kurzschlußstroms ausgelegt. Eine Lösung mit nur einem einpoligen als Leistungsschalter ausgebildeten Brennstoffzellenschutzschalter ist möglich.

Da die Arbeitskontakte 28, 30 in kritischen Zuständen des Brennstoffzellensystems oder des Fahrzeugs öffnen müssen, ist durch die Anordnung zweier, voneinander unabhängig betätigbarer Kontakte ein höheres Maß an Sicherheit dafür gegeben, daß ein Kontakt bei einer Störung des anderen arbeitet und das Netz wenigstens einpolig abschaltet.

Die Spulen der Brennstoffzellenschutzschalter 29, 31 bzw. Schütze oder Relais sind jeweils mit Ausgängen eines Steuerbausteins in Form eines Economizers 49 und eines Economizers 50 verbunden. Bei den beiden Economizern 49 und 50, die auf einer Leiterplatte 51 angeordnet sind und zu einer im folgenden noch näher erläuterten Steuer und Auswerteinheit 52, die zu der zentralen Überwachungs- und Schalteinheit 18 gehört, handelt es sich um Schaltungen, die für Gleichstromschütze bzw. Relais eine höhere Leistung zum Betätigen, d. h. Anziehen, erzeugen und danach die geringere Haltespannung für die Schutzschalter 29, 31 bzw. Relais ausgeben. Auf der Leiterplatte 51 befindet sich weiterhin ein Relais-Treiberbaustein 53, mit dem ein Relais 54 außerhalb der Leiterplatte 51 verbunden ist. Der Treiberbaustein 53 hat zwei Eingänge, von denen einer über eine auf der Leiterplatte 51 angeordnete Diode 55 mit einem Steckverbinder 56 des Gehäuses 19 verbunden ist, an den ein Schlüsselschalter angeschlossen ist, mit dem das Fahrzeug gestartet wird. Bei geschlossenen Schlüsselschalter liegt am einen Eingang des Treiberbausteins 53 die Spannung des Niedervolt-Netzes 8 im Fahrzeug an. Dieses Niedervolt-Netz ist als übliches Bordnetz für Fahrzeuge ausgebildet und enthält einen Akkumulator 9 von z. B. 12 V, 14 V, 24 oder 36. Verbraucher in diesem Niedervolt-Netz sind z. B. Scheibenwischermotore, Lüftermotore, Scheibenantriebsmotore, Lampen, Blinker usw. Das Relais 54, das auch als Systemrelais bezeichnet wird, versorgt nach dem Ansprechen elektronische Bauelemente auf der Leiter-platte 51 über seinen Kontakt mit Betriebsspannung von z. B. 12 - 14 V bzw. 24 oder 36 V.

Auf der Leiterplatte 51, die insbesondere die Komponenten der Steuer- und Auswerteinheit 52 trägt, befindet sich noch ein weiterer Treiberbaustein 56 mit zwei Eingängen, an dessen einen Ausgang ein Relais 57 außerhalb der Leiterplatte 51 und des Gehäuses 19 angeschlossen ist. Eine Leiterbahn 60 auf der Leiterplatte 51 ist über einen Steckverbinder 59 im Gehäuse 19 mit dem Niedervolt-Netz 8 verbunden, das über einen nicht näher bezeichneten Steckverbinder an das Gehäuse 19 geführt ist. Mit der Leiterbahn 60 sind eine Reihe von Bauelementen auf der Leiterplatte 51 verbunden sind. Die Anschlüsse für die Betriebsstromversorgung der Economizer 49, 50 sind an die Leiterbahn 60 angeschlossen. Der Anschluß für die Betriebsstromversorgung der Treiberstufe 53 ist über eine nicht näher bezeichnet Diode mit der Leiterbahn 60 verbunden. Weiterhin steht ein Anschluß eines Netzgeräts 61 mit der Leiterbahn 60 in Verbindung. Der zweite Anschluß des Netzgeräts 61 ist an die Fahrzeugmasse gelegt. Das Netzgerät 61 ist als DC/DC-Wandler ausgebildet und hat eine in der Zeichnung durch das Transformatorsymbol gekennzeichnete galvanische Trennung zwischen Eingangs- und Ausgangsspannung. Aus der Betriebsspannung von z. B. 12 oder 14 V des Bordnetzes erzeugt das Netzteil 61 eine höhere Spannung von z. B. 15 V. Das Relais 57 ist zur Steuerung der Vorladung der Gleichspannungs-Gleichspannungsschnittstelle bestimmt, und weist einen Kontakt 58 auf, der in Reihe mit einem Widerstand zu einem der Arbeitskontakte 28 oder 30 parallel geschaltet ist. Die Spule des Relais 57 ist über einen Steckverbinder 80 mit dem Treiberbaustein 56 und der Leiterbahn 60 verbunden. Die Reihenschaltung aus Kontakt 58 und Widerstand 81 ist mittels Steckverbindern an Leitungen im Gehäuse angeschlossen, mit denen eine Parallelschaltung zum Arbeitskontakt 30 hergestellt wird.

Die Leiterplatte 51 ist in Bezug auf die Betriebsspannung und die Spannungspegel der auf ihr angeordneten Bauelemente in zwei Abschnitte 63, 64 unterteilt, durch die eine räumliche Trennung der Bauelemente mit unterschiedlichen Spannungsniveaus erreicht wird. Auf diese Weise wird ein hohes Maß an Sicherheit gegen Kurzschlüsse zwischen Bauelementen und Leitungen bzw. Leiterbahnen mit unterschiedlichen Spannungsniveau erreicht.

Auf dem Abschnitt 63, dem das niedrige Spannungsniveau zugeordnet ist, befindet sich eine Auswertelektronik 62 und eine Bus-Schnittstelle 65. Zu der Auswertelektronik gehört eine Logikschaltung 66, die eine Reihe von Eingängen hat, deren Verbindung mit Bauelementen im folgenden noch näher beschrieben werden. Ausgangsseitig ist die Logikschaltung 66 mit Steuergängen der Economizer 49, 50 und der Treiberbausteine 53, 56 verbunden.

Im Brennstoffzellensystems sind Gassensoren für Wasserstoff zur Überwachung der Betriebsmittel vorhanden. Diese Gassensoren benötigen Betriebsspannungen, die von der Spannung des Niedervolt-Netzes 8 verschieden sind. Im allgemeinen ist die Betriebsspannung kleiner als die Bordnetzspannung. Die von den Gassensoren erzeugten Signale befinden sich zumindest nicht im Spannungsniveau des Bordnetzes oder im Bereich der von der Logikschaltung 63 verarbeitbaren Eingangssignale. Auf der Leiterplatte 51 sind daher analoge Umsetzer- und Anpassungsschaltungen 67, 68 vorgesehen. Die Umsetzer- und Anpassungsschaltungen 67, 68 haben jeweils nicht näher bezeichnete Ausgänge, an die über nicht näher bezeichnete Steckverbinder im Gehäuse 19 die Betriebsspannungsanschlüsse von nicht näher dargestellten Gassensoren angeschlossen sind. Weiterhin haben die Umsetzer- und Ausgangsschaltungen 67, 68 jeweils zwei nicht näher bezeichnete, an Steckverbinder im Gehäuse 19 angeschlossene Eingänge für die von den Gassensoren ausgegebenen analogen Signale. Die Ausgänge der Umsetzer- und Ausgangsschaltungen 67, 68 sind mit einem Eingang der Logikschaltung 66 und einem Eingang eines Prozessor 69 verbunden, der vorzugsweise ein µP ist. Es kann sich bei diesem Eingang des Prozessors 69 um einen analogen Eingang mit nachgeschaltetem A/D-Umsetzer handeln. Ein Eingang der Logikschaltung 66 ist für eine Schwellwerterfassung ausgebildet, d. h. die Ausgangssignale der Umsetzer- und Anpassungsschaltungen 67, 68 werden von der Logikschaltung 66 erst ab einer gewissen Höhe weiterverarbeitet. Die Umsetzer- und Anpassungsschaltungen 67, 68, die Logikschaltung 66 und der Prozessor 69 sind mit ihren entsprechenden Anschlüssen auf der Leiterplatte 51 zu externen Bauteilen und den Leiterbahnen zwischen den Anschlüssen und den Eingängen dieser Bauteile im Abschnitt 63 angeordnet. Die Logikschaltung 66 hat weitere Eingänge, die mit Steckverbindern 70 des Gehäuses 19 verbunden sind. An diese Eingänge sind z. B. Schaltkontakte angeschlossen. Mit diesen Schaltkontakten wird z. B. der Schließzustand von Vorrichtungen im bzw. am Fahrzeug überwacht. Ein Schaltkontakt 71, der vom Bordnetz 8 mit Spannung versorgt wird, ist für die Überwachung eines Dekkels des Gehäuses 19 vorgesehen. Weitere Eingänge der Logikschaltung 66 sind über den Steckverbinder 70 insbesondere an Sensoren von AIRBAGS und anderen Sensoren, die Zusammenstöße der mobilen Einrichtung bzw. des Fahrzeugs erfassen und melden, angeschlossen. Ein weiterer nicht näher bezeichneter Eingang der Logikschaltung 66 ist über den Steckverbinder 70 mit einem Not-Ausschalter verbunden. Mindestens ein Eingang der Logikschaltung 66 ist mit einem entsprechenden Ausgang des Prozessors 69 verbunden.

Der Prozessor 69 hat nicht näher bezeichnete Eingänge, die über einen Steckverbinder 72 des Gehäuses 19 mit einem Bus verbunden sind, an den auch andere Teilnehmer im Fahrzeug angeschlossen sind. Es handelt sich bei dem Bus vorzugsweise um den an sich bekannten CAN-Bus. Eine serielle Schnittstelle des Prozessor 69 ist an entsprechende Übertragungsgeräte anschließbar. Weiterhin ist am Prozessor 69 ein nicht näher bezeichneter BOOT-Eingang vorhanden. Bezugspotential für die auf dem Abschnitt 63 angeordneten Bauelemente ist Massenpotential des Fahrzeugs.

Auf dem Abschnitt 64 ist der Stromwandler 36 vorhanden. Der Stromwandler 36 ist Teil des Stromsensors 35, der nach dem an sich bekannten Kompensationsprinzip den Brennstoffzellenstrom mißt. Der Stromsensor 35 ist z. B. über einen nicht dargestellten Multiplexer mit einem A/D-Umsetzer 73 verbunden, der durch einen Optokoppler mit dem Prozessor 69 verbunden ist. Weiterhin hat der Stromsensor 35 am Ausgang einen nicht näher bezeichneten Optokoppler, dessen Ausgang einerseits mit einem Eingang des Prozessors 66 und andererseits mit einem Eingang der Logikschaltung 63 verbunden ist. Der A/D-Umsetzer 73 ist mit einem Eingang z. B. über den Multiplexer und eine nicht dargestellte Leitung mit dem positiven Ausgang 21 oder dem negativen Ausgang 22 verbunden.

Im Abschnitt 64 befindet sich eine Einrichtung 74 zur Messung der Isolationswiderstands zwischen dem elektrisch isolierten Netz und der Masse der mobilen Einrichtung bzw. des Fahrzeugs. Der Isolationswiderstand ist in der Zeichnung gestrichelt dargestellt und mit 75 bezeichnet. Bezugspotential für die im Abschnitt 64 angeordneten Bauelemente ist das Potential des positiven oder negativen Ausgangs 21, 22 der Brennstoffzelle 2. Der Isolationswiderstand 75 wird mit einem Impulsverfahren gemessen.

Bei der Isolationsmessung übernimmt der Prozessor 69 eine Reihe von Meßwerten der Spannung am Meßwiderstand erst nach einer bestimmten Wartezeit, die auf die Einschwingzeit des Meßsystems abgestimmt ist, mittelt diese, um niederfrequente Störungen zu minimieren, und berechnet anschließend den Isolationswiderstand. Im Betrieb der mobilen Einrichtung bzw. des Fahrzeugs, wenn die Spannung am Ausgang des Netzteils 61 verfügbar ist, wird ständig der Isolationswiderstand des ungeerdeten Netzes der Brennstoffzelle 2 gemessen. Bei unzulässigen Isolationsverschlechterungen veranlaßt der Prozessor 69 über die Logikschaltung 63 das Öffnen der Schaltkontakte 28, 30 der Schalter 29, 31.

Auf dem Stromwandler 36 befindet sich eine Zusatzwicklung, in die von einer Stromquelle ein definierter Strom eingespeist wird, um die Funktionsfähigkeit des Stromwandlers und des Optokoplers einschließlich der Leiterbahnen bis zum Prozessor 69 zu überprüfen.

Die Logikschaltung 66 hat hardwaremäßig realisierte logische Funktionen kombinatorischer und sequentieller Art und gegebenenfalls Speicherfunktionen, wodurch eine schnelle Verarbeitung der Eingangssignale sichergestellt wird. Dies bedeutet, daß bei kritischen Situation im und an der mobilen Einrichtung bzw. am Fahrzeug bzw. Gefahren für die Fahrzeugsinsassen, die von entsprechenden Sensoren gemeldet werden, von der Logikschaltung 66 die entsprechenden Meldungen sehr schnell verarbeitet bzw. weitergeleitet werden und über die Economizer 49, 50 bzw. 56 das Öffnen der Schaltkontakte 28, 30 bzw. 58 hervorrufen. Das Hochvoltnetz 3 mit den daran angeschlossenen Verbrauchern wird daher spannungslos, so daß von daher keine Gefahr mehr in Bezug auf eine gefährliche Spannung ausgehen kann.

Die Feststellung eines Kurzschlußstroms im Brennstoffzellennetz wird dem Prozessor 69 gemeldet und bewirkt über die Logikschaltung 66 die sofortige Auslösung, d. h. Öffnung, der Schaltkontakte 28, 30 sowie des Kontakts, sollte sich dieser in geschlossenem Zustand befinden.

Durch die vorstehend beschriebenen Überwachungsmaßnahmen und die Trennung der Leiterplatte 51 in einen Niedervolt-Abschnitt 63 und einen Hochvolt-Abschnitt 64 wird bereits ein hohes Maß an Sicherheit erreicht. Die Einrichtung 74 zur Messung des Isolationswiderstands wird vom Prozessor 69 aus über eine nicht näher dargestellte Optokoppler-Schnittstelle angestoßen bzw. gesteuert. Dies trifft auch auf den A/D-Umsetzer 73 und den Stromsensor 35 zu.

Alle Ein- und Ausgänge der Bauteile auf dem Abschnitt 63 sind kurzschlußfest gegenüber Fahrzeugmasse und der 12 V bzw. 14 V bzw. 24/26 V Spannung und lassen sich bei Kurzschlüssen als Fehler detektieren, die gemeldet werden bzw. zusätzlich zur Meldung bei solchen Kurzschlüssen, durch die die Sicherheit des Betriebs und des Fahrzeugs in unzulässiger Weise beeinträchtigt wird, zur Öffnung der Schaltkontakte 28, 30 führen. Das Relais 57 mit dem Kontakt 58 und dem Widerstand 81 sowie den zugeordneten Leiterbahnen und Steckverbindern befindet sich in einem eigenen mit dem Gehäuse 19 lösbar befestigbaren Gehäuse 80a, das wahlweise mit dem Gehäuse 19 verbunden wird, wenn eine Vorladung von Stromkreisen bzw. Wandlern benötigt wird.

Das Niedervolt-Netz 8 hat im Gehäuse 19 Abzweige, von denen nur zwei mit 76, 77 bezeichnet sind. Die Abzweige weisen Absicherungen, 78, 79 auf, mit denen die Abzweige Kurzschlußfest ausgebildet sind. An die Abzweige ist über nicht näher bezeichnete Steckverbinder ein Steuergerät in der mobilen Einrichtung 1 angeschlossen. Die kurzschlußfesten Abzweige bilden die Schnittstelle von 12 - 14 V zum Steuergerät.

Alle Steckverbinder des Gehäuses 19 haben mindestens die Schutzart IP 67 nach DIN 40050, d. h. Schutz gegen Berührung spannungsführender Teile, gegen Staubeintritt und gegen Wasser. Die für die Überwachung der elektrischen Größen der Brennstoffzelle und der Leitungsnetze 3 und 8 erforderlichen Bauteile befinden sich auf der Leiterplatte 52.

An Stelle der oben beschriebenen Steckkontakte können auch wasserdichte Kabeldurchführungen vorgesehen sein. Steckkontakte haben allerdings den Vorteil, daß die Leitungen einfach abgezogen werden können, so daß die Überwachungs- und Schalteinheit 16 schneller ausgebaut werden kann. Die Bauteile der Überwachungs- und Schalteinheit 19 werden nach Kraftfahrzeugstandard ausgeführt.

Das Gehäuse 19 wird mittels zwei nicht näher bezeichneter Zentrierleisten und Schrauben 82, von denen in Fig. 2 zwei dargestellt sind, am Gehäuse 20 befestigt.

Beim Einschieben des Gehäuses 19 in die Zentrierleisten am Gehäuse 20 werden die Steckverbinder 23, 24 zusammengefügt. Durch die starre Verbindung der beiden Gehäuse 19, 20 bildet die zentrale Überwachungs- und Steuereinheit 18 eine Schwingungseinheit mit der Brennstoffzelle 2, so daß keine eigene schwingungsfähige Lagerung in der mobilen Einrichtung 1 bzw. im Fahrzeug notwendig ist.

Die Leiter 32, 33 und 37 bis 44 sind vorzugsweise mit den Sicherungshaltern auf einer zentralen Verteilerleiterplatte im Gehäuse 19 angeordnet. Die Sicherungshalter mit den Sicherungen sind unter dem Deckel 83 des Gehäuses 19 angeordnet. Auf den Sicherungen ist zusätzlich eine Abdeckung vorhanden, so daß die Sicherungen bzw. Sicherungshalter beim Öffnen des Deckels erst berührt werden können, wenn der zusätzliche Deckel abgenommen ist. Das Gehäuse 19 kann in der mobilen Einrichtung 1 bzw. am Fahrzeug so angebracht werden, daß es von dessen Unterseite geöffnet werden kann.

Das Gehäuse 19 kann aus Metall oder einem beständigen Kunststoff oder aus einer Kombination von beiden bestehen. Das Niedervolt-Leitungsnetz 8 kann eine Sicherungsplatine 84, die in Fig. 1 gestrichelt dargestellt ist, im Gehäuse 19 oder an anderer Stelle in der Einrichtung 1 aufweisen. Die Anordnung im Gehäuse 19 hat den Vorteil, daß alle Sicherungen an zentraler Stelle vorhanden sind. Die Leitungen zu den Sicherungen des Niedervolt-Netz 8 sind mittels nicht dargestellter Steckverbinder anschließbar. Eine über das Brennstoffzellengehäuse 20 geschleifte Leitung 85, die über Steckverbinder zwischen Gehäusen 19, 20 geführt ist, wird beim Ausbau des Gehäuses 19 geöffnet. Diese Leitung 85 ist mit der Logikschaltung 66 verbunden, die beim Öffnen der Leitung 85 die Brennstoffzellenschutzschalter 29, 30 öffnet.

Im unteren Teil des Gehäuses 19 sind in der Wand Steckverbinder, z. B. 47, angeordnet. Die Steckverbinder sind staubund wasserdicht mit der Wand verbunden. Der Deckel 83 deckt auch die Seitenwände des Gehäuses ab und hat Öffnungen im Bereich der Steckverbinder.

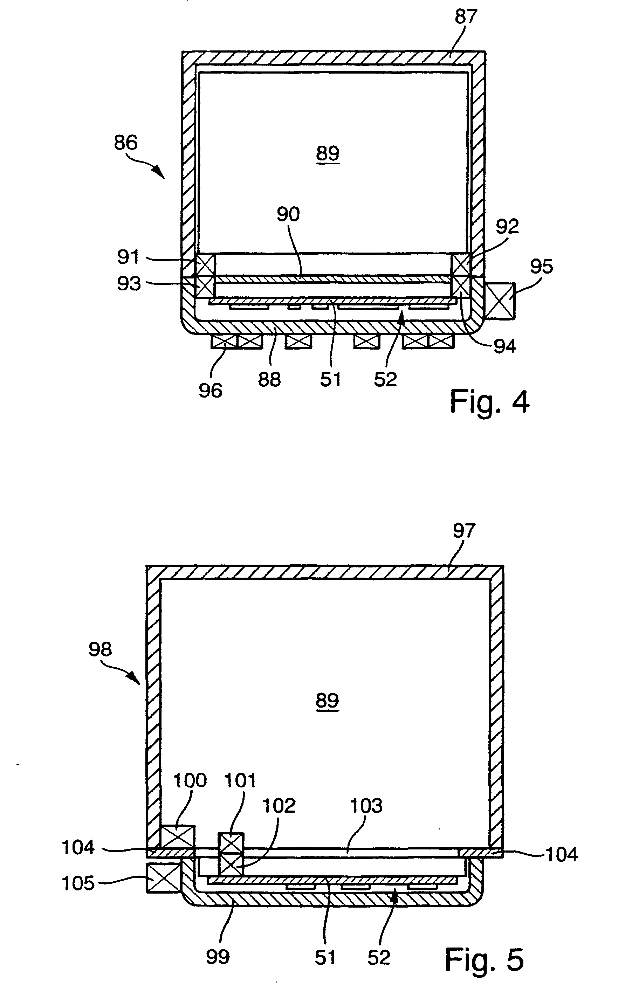

In Fig. 4 ist eine zentrale Schalt- und Überwachungseinheit 86 dargestellt, die ein Gehäuse 87 für die Stromverteilung, Schaltelemente sowie Sicherungen in Hochvolt-Leitungsnetz 3 und ein Gehäuse 88 aufweist, in dem sich die Steuer- und Auswerteinheit 52 befindet, die ein Teil der Schalt- und Überwachungseinheit 86 bildet. Gleiche Teile in den Fig. 1 - 5 sind mit gleichen Bezugszeichen versehen. Die Schaltelemente, Leiterbahnen, Abzweige, Sicherungen auf der Hochvolt-Seite der Schalt- und Überwachungseinheit 86, d. h. die Schalt- und Verteileinheit, sind Fig. 4 allgemein mit 89 bezeichnet. Das kastenförmige Gehäuse 87 hat auf einer Seite ein insgesamt oder im wesentlichen ganz über die Seite sich erstreckende Öffnung, die nicht näher bezeichnet ist. Diese Öffnung ist mit dem Gehäuse 88 verschließbar, das trogförmig ausgebildet ist, d. h. im Querschnitt U-förmig ist. Die Tiefe des Gehäuses 88 ist für die Aufnahme der Komponenten der Steuer- und Auswerteinheit 52 bestimmt, deren Leiterplatte 52 im Gehäuseinneren parallel zur flachen Breitseite des einen Deckel für das Gehäuse 87 bildenden Gehäuses 88 angeordnet ist. Die Öffnung des Gehäuses 89 ist weiterhin mit einer wärmedämmenden Platte 90 abgedeckt. An den Rändern der Gehäuse 87 und 88 befinden sich Steckverbinder 91, 92 bzw. 93, 94. Bei miteinander verbundenen Gehäusen 87, 88 greifen die Steckverbinder 91 und 93 ebenso wie Steckverbinder 92 und 94 ineinander. Über die Steckverbinder 91, 93 verlaufen die Verbindungen zwischen den elektrischen Komponenten der Steuer- und Auswerteinheit 51 und den elektrischen Komponenten, der Schalt- und Verteileinheit, die sich in dem mit 89 bezeichneten Teil der Schalt- und Überwachungseinheit 86, befindet.

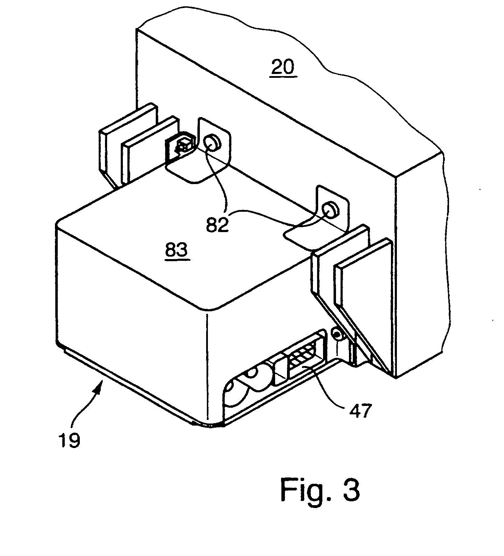

Über die Steckverbinder 92, 94 sind die Verbindungen zwischen den Abzweigen des Hochvolt-Leitungsnetzes 3 und den Verbrauchern sowie der Hybrid-Batterie bzw. dem Superkondensator geführt. Innerhalb des Gehäuses 88 verlaufen diese Abzweigleitungen zu Steckverbindern 95 an einer seitlichen Gehäusewand. Von den Steckverbindern 95 gehen nicht näher dargestellte, mit korrespondierenden Steckverbindern an den Enden ausgestattete Leitungen zu den Verbrauchern bzw. der Hybrid-Batterie. Weitere Steckverbinder 96 am Gehäuse 88 sind für den Anschluß von Leitungen vorgesehen, die die oben beschriebenen Sensoren in der mobilen Einrichtung mit den Komponenten der Schalt- und Überwachungseinheit 52 verbinden. Beim öffnen des Gehäuses 87 durch Abnahme des als Deckel ausgebildeten Gehäuses 88, werden die elektrischen Verbindungen zu den Verbrauchern und der Hybrid-Batterie unterbrochen, so daß die Verbraucher spannungslos werden. Es ist dann nicht mehr nötig, einen besonderen Ausschalter zu betätigen. Außerdem werden die Steuerleitungen zwischen der Schalt- und Überwachungseinheit 52 und den Batterieschutzschaltern unterbrochen, so daß diese wegen des Wegfalls der Spulenspannung ihre Kontakte öffnen. Sowohl das Innere des Gehäuses 87 als auch das Gehäuse 88 ist dann zugänglich. Ein eigener Deckelüberwachungsschalter kann eingespart werden. Das Gehäuse 87 ist auf eine Art mit dem Brennstoffzellengehäuse verbunden, wie sie in Fig. 3 dargestellt ist.

In Fig. 5 ist eine gegenüber der Vorrichtung gemäß Fig. 4 bezüglich der Anschlüsse etwas abgewandelte Form eines Gehäuses 97 mit den Komponenten der Schalt- und Verteileinheit einer Schalt- und Überwachungseinheit 98 und eines Gehäuses 99 für die Steuer- und Auswerteinheit 51 dargestellt, deren Leiterplatte 52 innerhalb des Gehäuses 99 angeordnet ist. Das Wannenförmige Gehäuse 99 bildet den Deckel für das an einer Seite offene Gehäuse 97, da am unteren Rand Steckverbinder 100 für die Verbindung der Abzweige mit Leitungen enthält, die zu den Verbrauchern bzw. der Hybrid-Batterie bzw. den Superkondensator verlaufen.

Eine wärmeisolierende Platte 103 trennt das Innere des Gehäuses 97 vom Inneren des Gehäuses 99. Zwischen den Rändern der Öffnungen der Gehäuse 97 und 99 sind Dichtungen 104 vorgesehen. Das Gehäuse 99 trägt an einer Seite, die gegen die darüberliegende Seitenwand des Gehäuses 97 zurückgesetzt ist, Steckver-binder 105 für die Leitungen zu Sensoren bzw. Melde- und An- zeigeelementen oder anderen Busteilnehmern in der mobilen Einrichtung.

## Patentansprüche

1. Vorrichtung mit einer Brennstoffzelle (2) zur Erzeugung von elektrischer Energie und mit Verteilung der elektrischen Energie an elektrische Verbraucher, die in einem mit der Brennstoffzelle verbundenen Hochvolt-Leitungsnetz (3) angeordnet sind, und an weitere elektrische Verbraucher, die in einem Niedervolt-Leitungsnetz (8) angeordnet sind, das über einen Gleichspannungs-Gleichspannungs-Wandler (7) mit dem Hochvolt-Leitungsnetz verbunden ist, **dadurch gekennzeichnet, daß** eine zentrale Überwachungs- und Schalteinheit (18) ein lösbar am Brennstoffzellengehäuse (20) befestigbares Gehäuse (19) aufweist, in dem elektrische Leiter (25, 32; 26, 33) angeordnet sind, die über Durchführungen in einer Gehäusewand (19) und Kontaktmittel je mit einem elektrischen Ausgang (21, 22) der Brennstoffzelle (2) verbunden sind, und von denen wenigstens einer (25, 32) einen Kontakt (28) eines Brennstoffzellenschutzschalters (29) aufweist, daß die Leiter (32, 33) über Abzweige (37 - 46), die (37 - 41) zumindest einpolig mit Sicherungen versehen sind, und Durchführungen in einer Gehäusewand (19) und Kontaktmittel mit Verbrauchern verbunden sind, daß das Niedervolt-Leitungsnetz (8) über eine Durchführung mit einer zu der zentralen Überwachungs- und Schalteinheit (18) gehörenden Steuer- und Auswerteinheit (52) verbunden ist, daß die Steuer- und Auswerteinheit (52) über Durchführungen in einer Gehäusewand (19) und Kontaktmittel mit Sensoren zur Erfassung von Betriebszuständen (2) der Vorrichtung verbunden ist, daß die Durchführungen in den Gehäusewänden (19) staub- und wasserdicht und die Kontaktmittel lösbar sind.

2. Vorrichtung nach Anspruch 1, **dadurch gekennzeichnet, daß** die Steuer- und Auswerteinheit (52) beim Erreichen der Betriebsbereitschaft der Brennstoffzelle (2) den Brennstoffzellenschutzschalter (28, 29) schließt und/oder bei Erfassung von durch die Sensoren gemessenen Betriebszuständen, die vorgebbaren kritischen Betriebszuständen entsprechen, den Brennstoffzellenschutzschalter (28, 29) öffnet.

3. Vorrichtung nach Anspruch 1, **dadurch gekennzeichnet, daß** die Steuer- und Auswerteinheit (52) im Inneren des Gehäuses (19) zusammen mit den anderen Komponenten der zentralen Überwachungs- und Schalteinheit (18) angeordnet ist.

4. Vorrichtung nach Anspruch 1, **dadurch gekennzeichnet, daß** die Steuer- und Auswerteinheit (52) in einem eigenen Gehäuse (88, 99) angeordnet ist, das als Deckel für eine Öffnung an einem Gehäuse (87, 97) angebracht ist, in dem sich eine Schalt- und Verteileinheit (89) der zentralen Überwachungs- und Schalteinheit (86, 98) befindet.

5. Vorrichtung nach zumindest einem der vorhergehenden Ansprüche, **dadurch gekennzeichnet, daß** das Gehäuse (88, 99) der Steuer- und Auswerteinheit gegen das Gehäuse (87, 97) mit den Komponenten der Schalt- und Verteileinheit (89) der zentralen Überwachungs- und Schalteinheit (86, 98) wärmeisoliert ist.

6. Vorrichtung nach zumindest einem der vorhergehenden Ansprüche, **dadurch gekennzeichnet, daß** die Steuer- und Auswerteinheit (52) eine mit elektronischen Bauteilen bestückte Leiterplatte (51) aufweist, die im Innern des als wannenförmiger Deckel ausgebildeten Gehäuses (88, 99) angeordnet ist, das eine der Öffnung des Gehäuses (87, 97) mit den Komponenten der Schalt- und Verteileinheit (89) zugewandte Öffnung hat.

7. Vorrichtung nach zumindest einem der vorhergehenden Ansprüche, **dadurch gekennzeichnet, daß** sie als Kraftfahrzeug ausgebildet ist.

8. Vorrichtung nach zumindest einem der vorhergehenden Ansprüche, **dadurch gekennzeichnet, daß** die staub- und wasserdichten Durchführungen und die leicht lösbaren Kontaktmittel Steckverbinder (23, 24, 47, 56, 59, 70, 72) sind.

9. Vorrichtung nach zumindest einem der vorhergehenden Ansprüche, **dadurch gekennzeichnet, daß** die Steuer- und Auswerteinheit (52) mit außerhalb des Gehäuses angeordneten Gassensoren für die Erfassung von Lecks in wasserstofferzeugenden, wasserstoffspeichernden oder wasserstoffleitenden Einheiten der mobilen Einrichtung, mit einem Sensor (35) für den Brennstoffzellenstrom, mit wenigstens einem Sensor, der den Aufprall der mobilen Vorrichtung auf ein Hindernis erfaßt, mit einer Einrichtung (74) zur Messung des Isolationswiderstands des elektrisch isolierten Hochvolt-Leitungsnetzes (3), mit einem Sensor für die Brennstoffzellenspannung und mit einem Sensor für die Messung der Spannung des Niedervolt-Leitungsnetzes (8) verbunden ist und bei Erfassung eines Meßwerts, der aus Sicherheitsgründen unerwünscht oder unzulässig ist, den Brennstoffzellenschutzschalter (28) öffnet.

10. Vorrichtung nach Anspruch 9, **dadurch gekennzeichnet, daß** mit der Steuer- und Auswerteinheit (52) die Spannungen des Hochvolt- und Niedervolt-Netzes (3, 8) auf Über- oder Unterschreiten vorgebbarer Grenzwerte, der Brennstoffzellenausgangstrom auf Überschreitung eines vorgebbaren Grenzwerts und der Isolationswiderstand des Hochvolt-Netzes (3) auf Unterschreiten eines vorgebbaren Grenzwerts überwacht ist.

11. Vorrichtung nach zumindest einem der vorhergehenden Ansprüche, **dadurch gekennzeichnet, daß** das Gehäuse (19) an einer bei mechanischer Zerstörung der mobilen Einrichtung nicht oder nur wenig beeinträchtigten Stelle angeordnet ist.

12. Vorrichtung nach zumindest einem der vorhergehenden Ansprüche, **dadurch gekennzeichnet, daß** die Steuer- und Auswerteinheit (52) aus integrierten Schaltungen besteht, die auf einer Leiterplatte (51) im Gehäuse (19; 88; 99) angeordnet sind.

13. Vorrichtung nach zumindest einem der vorhergehenden Ansprüche, **dadurch gekennzeichnet, daß** über eine beim Entfernen des Gehäuses (19) aus der Verbindung mit dem Brennstoffzellengehäuse (20) auftrennbare Leitung (85) die Brennstoffzelle (2) abschaltbar ist.

14. Vorrichtung nach zumindest einem der vorhergehenden Ansprüche, **dadurch gekennzeichnet, daß** das Gehäuse (19; 88; 99) und/oder das Brennstoffzellengehäuse (20) Zentrier- oder Führungsmittel zum formschlüssigen Befestigen des Gehäuses (19) am Brennstoffzellengehäuse (20) aufweisen.

15. Vorrichtung nach zumindest einem der vorhergehenden Ansprüche, **dadurch gekennzeichnet, daß** das Gehäuse (19; 88; 99) am Brennstoffzellengehäuse (20) anschraubbar oder mittels Rastmitteln befestigbar ist.

16. Vorrichtung nach zumindest einem der vorhergehenden Ansprüche, **dadurch gekennzeichnet, daß** das Gehäuse (19; 88; 99) starr am Brennstoffzellengehäuse (20) befestigbar ist.

17. Vorrichtung nach zumindest einem der vorhergehenden Ansprüche, **dadurch gekennzeichnet, daß** im Gehäuse (19; 88; 99) der Schalt- und Überwachungseinheit (18) ein eigenes Gehäuse (34) für Sicherungen in den Abzweigen (37 - 42) angeordnet ist.

18. Vorrichtung nach Anspruch 17, **dadurch gekennzeichnet, daß** die Sicherungen des Hochvolt-Leitungsnetzes (3) in einem Sicherungsgehäuse angeordnet und von außerhalb des Gehäuses (19) der Schalt- und Überwachungseinheit (18) über eine verschließbare Öffnung zugänglich sind.

19. Vorrichtung nach Anspruch 17 oder 18, **dadurch gekennzeichnet, daß** die Sicherungen auf einer Leiterplatte unterhalb des dicht verschließbaren Deckels des Gehäuses (19) der Schalt- und Überwachungseinheit (18) angeordnet sind.

20. Vorrichtung nach zumindest einem der vorhergehenden Ansprüche, **dadurch gekennzeichnet, daß** der Stromrichter des Antriebsmotors (5) für die mobile Einrichtung (1) mit einer Sicherung im Gehäuse (19) abgesichert ist.

21. Vorrichtung nach zumindest einem der vorhergehenden Ansprüche, **dadurch gekennzeichnet, daß** das Gehäuse (19; 88; 99) aus Metall besteht.

22. Vorrichtung nach zumindest einem der Ansprüche 1 bis 20, **dadurch gekennzeichnet, daß** das Gehäuse (19; 88; 99) aus Kunststoff besteht.

23. Vorrichtung nach zumindest einem der Ansprüche 1 bis 20, **dadurch gekennzeichnet, daß** das Gehäuse (19) aus Metall- und Kunststoffteilen zusammengesetzt ist.

24. Vorrichtung nach zumindest einem der vorhergehenden Ansprüche, **dadurch gekennzeichnet, daß** das Gehäuse (19) der Überwachungs- und Schalteinheit (18) an der Gehäuseöffnung einen Schalter (71) oder Sensor aufweist, der beim Öffnen des Gehäusedeckels anspricht und den Brennstoffzellenschutzschalter (28, 30) öffnet.

25. Vorrichtung nach zumindest einem der vorhergehenden Ansprüche, **dadurch gekennzeichnet, daß** die Sicherungen für die Stromkreise des Niedervolt-Leitungsnetzes (8) im Gehäuse (19) angeordnet sind.

26. Vorrichtung nach zumindest einem der Ansprüche 24, 25, **dadurch gekennzeichnet, daß** die Sicherungen für die Stromkreise des Niedervolt-Leitungsnetzes (8) in Sicherungshaltern auf einer Leiterplatte angeordnet sind.

27. Vorrichtung nach zumindest einem der vorhergehenden Ansprüche, **dadurch gekennzeichnet, daß** Komponenten für die Vorladung des Gleichstrom-Gleichstrom-Wandlers (7) in einem Gehäuse (80a) am Gehäuse (19) der Überwachungs- und Schalteinheit (16) angeordnet sind.

28. Vorrichtung nach zumindest einem der vorhergehenden Ansprüche, **dadurch gekennzeichnet, daß** ein manuell betätigbarer Ausschalter (27) im Zuge der Leiter (25, 32; 26, 33) vor dem Brennstoffzellenschutzschalter (29, 30) im Gehäuse (19; 88; 99) angeordnet ist.

## Claims

1. Apparatus having a fuel cell (2) for production of electrical power and with the electrical power being distributed to electrical loads which are arranged in a high-voltage cable network (3) which is connected to the fuel cell, and being distributed to further electrical loads which are arranged in a low-voltage cable network (8), which is connected to the high-voltage cable network via a DC/DC converter (7), **characterized in that** a central monitoring and switching unit (18) has a housing (19) which can be detachably attached to the fuel cell housing (20) and in which electrical conductors (25, 32; 26, 33) are arranged, which are connected to a respective electrical output (21, 22) of the fuel cell (2) via bushings in a housing wall (19) and contact means, and at least one (25, 32) of which has a contact (28) for a fuel cell circuit breaker (29), **in that** the conductors (32, 33) are connected to loads via outgoers (37 - 46) which (37 - 41) are provided with fuses in at least one pole and via bushings in a housing wall (19) and contact means, **in that** the low-voltage cable network (8) is connected via a bushing to a control and evaluation unit (52) which is part of the central monitoring and switching unit (18), **in that** the control and evaluation unit (52) is connected via bushings in a housing wall (19) and contact means to sensors for detection of operating states (2) of the apparatus, **in that** the bushings in the housing walls (19) are dust-tight and water-tight, and the contact means are detachable.

2. Apparatus according to Claim 1, **characterized in that** the control and evaluation unit (52) closes the fuel cell circuit breaker (28, 29) when the fuel cell (2) is ready to operate, and/or opens the fuel cell circuit breaker (28, 29) on detection of operating states, as measured by the sensors, which correspond to predeterminable critical operating states.

3. Apparatus according to Claim 1, **characterized in that** the control and evaluation unit (52) is arranged in the interior of the housing (19), together with the other components of the central monitoring and switching unit (18).

4. Apparatus according to Claim 1, **characterized in that** the control and evaluation unit (52) is arranged in its own housing (88, 99), which is fitted as a cover for an opening to a housing (87, 97), in which a switching and distribution unit (89) for the central monitoring and switching unit (86, 98) is located.

5. Apparatus according to at least one of the preceding claims, **characterized in that** the housing (88, 99) of the control and evaluation unit is thermally insulated from the housing (87, 97) with the components of the switching and distribution unit (89) of the central monitoring and switching unit (86, 98).

6. Apparatus according to at least one of the preceding claims, **characterized in that** the control and evaluation unit (52) has a printed circuit board (51) which is populated with electronic components and is arranged in the interior of the housing (88, 99), which is a cover in the form of a trough and has an opening facing the opening in the housing (87, 97) with the components of the switching and distribution unit (89).

7. Apparatus according to at least one of the preceding claims, **characterized in that** the apparatus is a motor vehicle.

8. Apparatus according to at least one of the preceding claims, **characterized in that** the dust-tight and water-tight bushings and the easily detachable contact means are plug connectors (23, 24, 47, 56, 59, 70, 72).

9. Apparatus according to at least one of the preceding claims, **characterized in that** the control and evaluation unit (52) is connected to gas sensors, which are arranged outside the housing, for detection of leaks in units of the mobile device which produce hydrogen, store hydrogen or carry hydrogen, to a sensor (35) for the fuel cell current, to at least one sensor which detects the impact of the mobile apparatus with an obstruction, to a device (74) for measurement of the insulation resistance of the electrically insulated high-voltage cable network (3), to a sensor for the fuel cell voltage, and to a sensor for measurement of the voltage of the low-voltage cable network (8), and opens the fuel cell circuit breaker (28) when a measured value is detected which is undesirable or not permissible for safety reasons.

10. Apparatus according to Claim 9, **characterized in that** the control and evaluation unit (52) monitors the voltages in the high-voltage and low-voltage networks (3, 8) for predeterminable limit values being overshot or undershot, monitors the fuel cell output current for overshooting a predeterminable limit value, and monitors the insulation resistance of the high-voltage network (3) for undershooting a predeterminable limit value.

11. Apparatus according to at least one of the preceding claims, **characterized in that** the housing (19) is arranged at a point which is not adversely affected, or is only slightly adversely affected, in the event of mechanical destruction of the mobile device.

12. Apparatus according to at least one of the preceding claims, **characterized in that** the control and evaluation unit (52) is formed from integrated circuits which are arranged on a printed circuit board (51) in the housing (19; 88; 99).

13. Apparatus according to at least one of the preceding claims, **characterized in that** the fuel cell (2) can be switched off via a cable (85) which can be disconnected when the housing (19) is removed from the connection to the fuel cell housing (20).

14. Apparatus according to at least one of the preceding claims, **characterized in that** the housing (19; 88; 99) and/or the fuel cell housing (20) have/has centring or guide means for interlocking attachment of the housing (19) to the fuel cell housing (20).

15. Apparatus according to at least one of the preceding claims, **characterized in that** the housing (19; 88; 99) can be screwed to the fuel cell housing (20), or can be attached to it by latching means.

16. Apparatus according to at least one of the preceding claims, **characterized in that** the housing (19; 88; 99) can be rigidly attached to the fuel cell housing (20).

17. Apparatus according to at least one of the preceding claims, **characterized in that** a dedicated housing (34) for fuses in the outgoers (37 - 42) is arranged in the housing (19; 88; 99) of the switching and monitoring unit (18).

18. Apparatus according to Claim 17, **characterized in that** the fuses for the high-voltage cable network (3) are arranged in a fuse housing, and are accessible via an opening, which can be closed, from outside the housing (19) of the switching and monitoring unit (18).

19. Apparatus according to Claim 17 or 18, **characterized in that** the fuses are arranged on a printed circuit board underneath the cover, which can be closed to form a seal, of the housing (19) of the switching and monitoring unit (18).

20. Apparatus according to at least one of the preceding claims, **characterized in that** the converter for the drive motor (5) for the mobile device (1) is protected by a fuse in the housing (19).

21. Apparatus according to at least one of the preceding claims, **characterized in that** the housing (19; 88; 99) is composed of metal.

22. Apparatus according to at least one of Claims 1 to 20, **characterized in that** the housing (19; 88; 99) is composed of plastic.

23. Apparatus according to at least one of Claims 1 to 20, **characterized in that** the housing (19) is assembled from metal and plastic parts.

24. Apparatus according to at least one of the preceding claims, **characterized in that** the housing (19) of the monitoring and switching unit (18) has a switch (71) or a sensor on the housing opening, which switch (71) or sensor responds when the housing cover is opened, and opens the fuel cell circuit breaker (28, 30).

25. Apparatus according to at least one of the preceding claims, **characterized in that** the fuses for the circuits of the low-voltage cable network (8) are arranged in the housing (19).

26. Apparatus according to at least one of claims 24, 25, **characterized in that** the fuses for the circuits for the low-voltage cable network (8) are arranged in fuse holders on a printed circuit board.

27. Apparatus according to at least one of the preceding claims, **characterized in that** components for precharging of the DC/DC converter (7) are arranged in a housing (80a) on the housing (19) of the monitoring and switching unit (16).

28. Apparatus according to at least one of the preceding claims, **characterized in that** a manually operable off switch (27) is arranged in the course of the conductors (25, 32; 26, 33) upstream of the fuel cell circuit breaker (29, 30) in the housing (19; 88; 99).

## Revendications

1. Dispositif comportant une pile à combustible (2) pour produire une énergie électrique avec une répartition de l'énergie électrique à des appareils d'utilisation électriques, qui sont disposés dans un réseau de lignes à haute tension (3) reliées à la pile à combustible, et à d'autres appareils d'utilisation électriques qui sont disposés dans un réseau de lignes à basse tension (8), qui est relié au réseau de lignes à haute tension par l'intermédiaire d'un convertisseur de tension continue - tension continue (7), **caractérisé en ce qu'**une unité centrale de contrôle et de commutation (18) comporte un boîtier (19) pouvant être fixé de façon amovible sur le boîtier (20) de la pile à combustible et dans lequel sont disposés des conducteurs électriques (25,32;26,33), qui sont reliés respectivement à une sortie électrique (21,22) de la pile à combustible (2) par l'intermédiaire de traversées aménagées dans une paroi (19) du boîtier et par l'intermédiaire de moyens de contact, et dont au moins l'un (25,32) comporte un contact (28) d'un disjoncteur (19) de la pile à combustible, que les conducteurs (32,33) sont reliés à des appareils d'utilisation par l'intermédiaire de dérivation (37-46), parmi lesquels les dérivations (37-41) sont pourvues au moins de façon unipolaire de fusibles, et par l'intermédiaire de traversées aménagées dans une paroi (19) du boîtier et de moyens de contact, que le réseau de lignes à basse tension (8) est relié au moyen d'une traversée à une unité de commande et d'évaluation (52) associée à l'unité centrale de contrôle et de commutation (18), que l'unité de commande et d'évaluation (52) est reliée à des capteurs servant à détecter les états de fonctionnement (2), par l'intermédiaire de traversées aménagées dans une paroi (19) du boîtier et par l'intermédiaire de moyens de contact, que les traversées aménagées dans les parois (19) du boîtier sont étanches à la poussière et à l'eau et que les moyens de contact sont amovibles.

2. Dispositif selon la revendication 1, **caractérisé en ce que** lorsque la pile à combustible (2) est prête pour le fonctionnement, l'unité de commande et d'évaluation (52) ferme le disjoncteur (28,29) de la pile à combustible et/ou que, lors de la détection d'états de fonctionnement mesurés par les capteurs, qui correspondent à des états de fonctionnement critiques pouvant être prédéterminés, l'unité de commande et d'évaluation ouvre le disjoncteur (28,29) de la pile à combustible.

3. Dispositif selon la revendication 1, **caractérisé en ce que** l'unité de commande et d'évaluation (52) est disposée à l'intérieur du boîtier (19) conjointement avec les autres composants de l'unité centrale de contrôle et de commutation (18).

4. Dispositif selon la revendication 1, **caractérisé en ce que** l'unité de commande et d'évaluation (52) est disposée dans un boîtier particulier (88,99) qui est monté en tant que couvercle pour une ouverture sur un boîtier (87,97), dans lequel est disposée une unité de commutation et de répartition (89) de l'unité centrale de contrôle et de commutation (86,98).

5. Dispositif selon au moins l'une des revendications précédentes, **caractérisé en ce que** le boîtier (88,89) de l'unité de commande et d'évaluation est isolé thermiquement par rapport au boîtier (87,97) comportant les composants de l'unité de commutation et de répartition (89) de l'unité centrale de contrôle et de commutation (86,98).

6. Dispositif selon au moins l'une des revendications précédentes, **caractérisé en ce que** l'unité de commande et d'évaluation (52) comporte une plaquette à circuits imprimés (51), qui est équipée de composants électroniques et est disposée à l'intérieur du boîtier (88,99) agencé sous la forme d'un couvercle en forme de cuvette et qui comporte une ouverture tournée vers l'ouverture du boîtier (87,97) comportant les composants de l'unité de commutation et de répartition (89).

7. Dispositif selon au moins l'une des revendications précédentes, **caractérisé en ce qu'**il est agencé sous la forme d'un véhicule automobile.

8. Dispositif selon au moins l'une des revendications précédentes, **caractérisé en ce que** les traversées étanches à la poussière et à l'eau et les moyens de contact aisément amovibles sont des connecteurs (23,24,47,56,59,70,72).

9. Dispositif selon au moins l'une des revendications précédentes, **caractérisé en ce que** l'unité de commande et d'évaluation (52) est reliée à des capteurs de gaz disposés à l'extérieur du boîtier et servant à détecter des fuites dans des unités de production d'hydrogène, d'accumulation d'hydrogène et de guidage d'hydrogène du dispositif mobile, un capteur (35) pour le courant de la pile à combustible, comportant au moins un capteur qui détecte le choc du dispositif mobile contre un obstacle, un dispositif (74) servant à mesurer la résistance d'isolation du réseau électriquement isolé (3) de lignes à haute tension, un capteur pour la tension de la pile à combustible et un capteur pour la mesure de la tension du réseau de lignes à basse tension (8), et, lors de la détection d'une valeur de mesure qui est indésirable ou inadmissible pour des questions de sécurité, ouvre le disjoncteur (28) de la pile à combustible.

10. Dispositif selon la revendication 9, **caractérisé en ce que** l'unité de commande et d'évaluation (52) contrôle les tensions du réseau à haute tension et du réseau à basse tension (3,8) en ce qui concerne la présence éventuelle de surtensions ou de dépassement, par valeurs supérieures ou inférieures, de valeurs limites pouvant être prédéterminées, le courant de sortie de la pile à combustible pour déterminer s'il dépasse une valeur limite pouvant être prédéterminée, et la résistance d'isolement du réseau à haute tension (3) pour déterminer si elle dépasse une valeur limite pouvant être prédéterminée.

11. Dispositif selon au moins l'une des revendications précédentes, **caractérisé en ce que** le boîtier (19) est disposé en un emplacement pas ou peu affecté lors d'une destruction mécanique du dispositif mobile.

12. Dispositif selon au moins l'une des revendications précédentes, **caractérisé en ce que** l'unité de commande et d'évaluation (52) est constituée par des circuits intégrés, qui sont disposés sur une plaquette à circuits imprimés (51) dans le boîtier (19;88;99).

13. Dispositif selon au moins l'une des revendications précédentes, **caractérisé en ce que** la pile à combustible (2) peut être débranchée par l'intermédiaire d'une ligne (85), qui peut être séparée de la liaison avec le boîtier (20) de la pile à combustible lors du retrait du boîtier (19).

14. Dispositif selon au moins l'une des revendications précédentes, **caractérisé en ce que** le boîtier (19;88;99) et/ou le boîtier (20) de la pile à combustible comportent des moyens de centrage ou des moyens de guidage pour la fixation selon une liaison par formes complémentaires du boîtier (19) sur le boîtier (20) de la pile à combustible.

15. Dispositif selon au moins l'une des revendications précédentes, **caractérisé en ce que** le boîtier (19;88;99) peut être vissé sur le boîtier (20) de la pile à combustible ou y être fixé à l'aide de moyens d'encliquetage.

16. Dispositif selon au moins l'une des revendications précédentes, **caractérisé en ce que** le boîtier (19;88;99) peut être fixé rigidement sur le boîtier (20) de la pile à combustible.

17. Dispositif selon au moins l'une des revendications précédentes, **caractérisé en ce qu'**un boîtier particulier (34) à fusibles est disposé dans les dérivations (37-42) dans le boîtier (19;88;99) de l'unité de commutation et de contrôle (18).

18. Dispositif selon la revendication 17, **caractérisé en ce que** les fusibles du réseau de lignes à haute tension (3) sont disposés dans un boîtier à fusibles et sont accessibles par l'intermédiaire d'une ouverture pouvant être fermée, à partir de l'extérieur du boîtier (19) de l'unité de commutation et de contrôle (18).

19. Dispositif selon la revendication 17 ou 18, **caractérisé en ce que** les fusibles sont disposés sur une plaquette à circuits imprimés au-dessous du couvercle, qui peut être fermé de façon étanche, du' boîtier (19) de l'unité de commutation et de contrôle (18).

20. Dispositif selon au moins l'une des revendications précédentes, **caractérisé en ce que** le convertisseur statique du moteur d'entraînement (5) pour le dispositif mobile (1) est protégé par un fusible dans le boîtier (19).

21. Dispositif selon au moins l'une des revendications précédentes, **caractérisé en ce que** le boîtier (19;88;99) est réalisé en un métal.

22. Dispositif selon au moins l'une des revendications 1 à 20, **caractérisé en ce que** le boîtier (19;88;99) est réalisé en une matière plastique.

23. Dispositif selon au moins l'une des revendications 1 à 20, **caractérisé en ce que** le boîtier (19) est formé par l'assemblage de pièces métalliques et de pièces en matière plastique.

24. Dispositif selon au moins l'une des revendications précédentes, **caractérisé en ce que** le boîtier (19) de l'unité de contrôle et de commutation (18) comporte au niveau de l'ouverture du boîtier un interrupteur (71) ou un capteur qui répond lors de l'ouverture du couvercle du boîtier et ouvre le disjoncteur (28,30) de la pile à combustible.

25. Dispositif selon au moins l'une des revendications précédentes, **caractérisé en ce que** les fusibles pour les circuits du réseau de lignes à basse tension (8) sont disposés dans le boîtier (19).

26. Dispositif selon au moins l'une des revendications 24, 25, **caractérisé en ce que** les fusibles pour les circuits du réseau de lignes à basse tension (8) sont disposés dans des porte-fusibles sur une plaquette à circuits imprimés.

27. Dispositif selon au moins l'une des revendications précédentes, **caractérisé en ce que** des composants pour la précharge du convertisseur courant continu - courant continu (7) sont disposés dans un boîtier (80a) sur le boîtier (19) de l'unité de contrôle et de commutation (18).

28. Dispositif selon au moins l'une des revendications précédentes, **caractérisé en ce qu'**un interrupteur (27) pouvant être actionné manuellement est disposé dans les conducteurs (25,32;26,33) en amont du disjoncteur (29,30) de la pile à combustible dans le boîtier (19;88;99).
